# EUROPÄISCHE PATENTSCHRIFT

(11) **EP 1 525 831 B1**
(45) Veröffentlichungstag und Bekanntmachung des Hinweises auf die Patenterteilung: **23.01.2008**
(21) Anmeldenummer: 04105141.8
(22) Anmeldetag: 19.10.2004
(51) Int. Cl.: A47J 27/62, A47J 27/04

(54) **Dampfgargerät**
Steam cooking device
Appareil de cuisson à vapeur

(30) Priorität: 20.10.2003 EP 03360120
(43) Veröffentlichungstag der Anmeldung: 27.04.2005
(73) Patentinhaber: BSH Bosch und Siemens Hausgeräte GmbH, 81739 München (DE)
(72) Erfinder: Bastian, Emil, 76571, Gaggenau (DE); Amrhein, Christophe, 67640, Lipsheim (FR); Danisch, Uwe, 72813 St Johann-Upfingen (DE); Peter, Sylvia, 77694, Kehl (DE)

(56) Entgegenhaltungen:
- CH-A- 691 280
- DE-A- 19 726 677
- DE-A- 19 907 049
- US-A- 4 303 816

## Beschreibung

Die Erfindung betrifft ein Dampfgargerät sowie ein Verfahren zur Dampfregelung in einem Dampfgargerät mit einem Garbehältnis zum Befüllen mit Garflüssigkeit, einer Heizeinrichtung zum Erwärmen des Garbehältnisses und einer Regeleinrichtung, die die Heizeinrichtung zur Regelung einer Temperatur in einem oberhalb der Garflüssigkeit befindlichen Dampfraum des Garbehältnisses bis auf eine Siedetemperatur der Garflüssigkeit ansteuert.

Aus DE 197 26 677 A1 ist ein gattungsgemäßes Dampfgargerät mit einem Garbecken bekannt, das mit Wasser gefüllt ist. Ferner ist eine Heizeinrichtung zum Erwärmen des Wassers vorgesehen. Die Garflüssigkeit wird in einer Kochbetriebsart unterhalb einer Temperatur geregelt, bei der eine erhebliche Dampfbildung einsetzt. In einer Dampfgarbetriebsart wird die Garflüssigkeit bis zu ihrer Siedetemperatur erwärmt. Der Dampf kann ungehindert aus dem Dampfgarraum in die Umgebung austreten, so dass sich in dem Dampfgarraum kein Überdruck gegenüber dem Luftdruck aufbaut. Im Dampfauslasskanal ist ein Temperatursensor angeordnet, der die Temperatur des Dampfes misst und ein entsprechendes Signal an eine Regeleinrichtung zur Regelung der Heizeinrichtung leitet.

DE 199 07 049 A1 beschreibt ein Dampfgargerät mit Dampfmengenregelung, bei dem das Dampfgargerät mit einem von einer Beckenwandung eines Beckens und einem auf das Becken aufsetzbaren Deckel umschlossenen Dampfgarraum, einem erhitzbaren Wasserreservoir für Wasser zur Erzeugung von Dampf, einer Heizeinrichtung zum Erwärmen des Wasserreservoirs, einem den Dampfgarraum mit der Umgebung verbindenden Dampfauslaß, einem im Bereich des Dampfauslasses angeordneten Temperatursensor zur Ermittlung der Temperatur des Dampfes und einer Regeleinrichtung zum Regeln der Heizeinrichtung in Abhängigkeit von dem Meßwert des Temperatursensors versehen ist. Damit sollen der Fertigungsaufwand reduziert und die Reinigungsmöglichkeiten verbessert werden. Dazu ist der Dampfauslaß zwischen Beckenwandung und Deckelrand oder in einem Randbereich des Deckels ausgebildet. In der Aufheizphase kann es zu einer übermäßigen Dampfproduktion kommen. Um dies zu verhindern, wird vorgesehen, dass ein für die Regelung der Heizeinrichtung maßgeblicher Grenzwert der Temperatur während der Aufheizphase des Dampfgargerätes herabgesetzt und im weiteren Betriebsverlauf kontinuierlich oder diskontinuierlich heraufgesetzt wird. Dadurch wird die Heizeinrichtung in der Aufheizphase bereits bei einer von dem Temperatursensor gemessenen Temperatur abgeschaltet bzw. heruntergeregelt, die zwar niedriger als die eigentliche Siedetemperatur ist, aber einer ausreichenden Dampfmenge entspricht. Wenn bei dem Dampfgargerät ein anderer Garbetrieb (z. B. Wärmen oder Ziehenlassen des Gargutes) mittels des Bedienelementes eingestellt ist, ist ein entsprechend anderer Grenzwert für die Regelung der Heizeinrichtung maßgeblich. Für die Regelung einer derartigen Betriebsart kann ein weiterer Temperatursensor vorgesehen sein, der die Temperatur des Wassers im Wasserreservoir misst.

Die Aufgabe der vorliegenden Erfindung besteht darin, ein Dampfgargerät sowie ein Verfahren zur Temperaturregelung in dem Dampfgargerät bereitzustellen, bei dem die Temperaturregelung des Dampfgargerätes verbessert ist.

Die Aufgabe der Erfindung ist durch ein Dampfgargerät mit den Merkmalen des Patentanspruchs 1 sowie ein Verfahren mit den Merkmalen des Patentanspruchs 12 gelöst. Mit der erfindungsgemäßen Regeleinrichtung kann nicht nur die Siedetemperatur als Sollwert für die Dampfraumtemperaturregelung eingestellt werden. Eine solche Siedepunkts-Einstellung erfolgt meist automatisch vor einer erstmaligen Inbetriebnahme des Gargerätes. Darüber hinaus kann der Benutzer manuell auch Dampfraumtemperaturen unterhalb der Siedetemperatur einstellen. Selbst temperaturempfindliches Gargut kann somit unterhalb der Siedetemperatur sicher gegart werden.

Vorteilhaft kann eine Ansprechempfindlichkeit des Dampfraumtemperatursensors derart ausgelegt sein, dass der Dampfraumtemperatursensor nur bei einer erheblichen Dampfbildung im Garbehältnis anspricht. D.h., dass ein solcher Dampfraumtemperatursensor nur bei einer erheblichen Dampfbildung im Garbehältnis einen Temperaturanstieg erfasst. Dies kann erfindungsgemäß realisiert werden, wenn der Dampfraumtemperatursensor an einer Dampfauslassöffnung des Garbehälters angeordnet ist. In diesem Fall erfasst der Sensor einen nennenswerten Temperaturanstieg im Dampfraum erst dann, wenn eine erhebliche Dampfmenge gebildet ist. Erst dann strömt nämlich eine merkliche Dampfströmung am Dampfraumtemperatursensor vorbei. Bei einer nur geringfügigen Dampfströmung aus dem Garbehältnis würde sich der Dampf im Bereich des Dampfraumtemperatursensors an der Dampfauslassöffnung mit kühler Umgebungsluft vermischen. In diesem Fall erfasst der Dampfraumtemperatursensor nur eine geringfügige Temperaturerhöhung. Dagegen würde bei einer Anordnung des Dampfraumtemperatursensors innerhalb des Garbehältnisses der Temperatursensor unabhängig vom erzeugten Dampfgehalt die Temperatur im Dampfraum oberhalb der Garflüssigkeit erfassen, ohne dass Rückschlüsse über die Dampfmenge im Dampfraum möglich wären.

Besonders vorteilhaft ist es, wenn der Dampfraumtemperatursensor abgetrennt vom eigentlichen Dampfraum in einem Verbindungskanal angeordnet ist, der den Dampfraum mit der Dampfauslassöffnung verbindet. Besonders vorteilhaft ist es auch, wenn der Dampfraumtemperatursensor mittels einer thermisch isolierenden Halterung an dem Garbehältnis gehaltert ist. Dadurch erfolgt keinerlei Erwärmung des Dampfraumtemperatursensor durch Seitenwände des Garbehältnisses.

Alternativ dazu kann bei der Dampfraumtemperaturregelung die Erzeugung einer erheblichen Dampfmenge im Garbehältnis wie folgt erfolgen: Die Regeleinrichtung steuert die Dampfraumtemperatur auf einen Sollwert unterhalb des Siedepunktes. Dabei unterbricht die Regeleinrichtung die Dampfraumtemperaturregelung für zumindest ein Zeitintervall. In diesem Zeitintervall wird die Garflüssigkeit zur Dampferzeugung bis auf die Siedetemperatur erwärmt. Eine Anzahl und/oder eine Zeitdauer solcher Zeitintervalle variiert in Abhängigkeit von der Größe des eingestellten Sollwertes.

Die Regeleinrichtung kann in einem besonderen Ausführungsbeispiel anhand der erfassten Garflüssigkeitstemperatur die Dampfraumtemperatur im Dampfraum näherungsweise bestimmen. Eine solche Bestimmung erfolgt beispielsweise über entsprechende Messtabellen, die in der Regeleinrichtung gespeichert sind. So wird der Dampfraumtemperatursensor im Sinne einer Bauteilreduzierung eingespart.

In einer weiteren Ausführungsform der Erfindung kann der Regeleinrichtung ein Öffnungssensor zugeordnet sein, der ein Öffnen des Garbehältnisses erkennt. Vorteilhaft kann der Dampfraumtemperatursensor diese Zusatzfunktion übernehmen. In diesem Fall erkennt die Regeleinrichtung das Öffnen des Garbehältnisses, wenn vom Dampfraumtemperatursensor eine vergleichsweise starke Temperaturreduzierung erfasst wird.

Üblicherweise wird die Heizeinrichtung bei der Regelung getaktet ein- und ausgeschaltet. Wenn im Taktbetrieb die Heizeinrichtung ausgeschaltet ist, ergibt sich aufgrund der resultierenden geringen Abkühlung des Garbehältnisses eine Rückluftströmung in den Dampfraum. Für eine effektive Messung der Dampfraumtemperatur kann es daher von Vorteil sein, wenn der Dampfraumtemperatursensor innerhalb des Dampfraumes möglichst beabstandet von dem Dampfauslass angeordnet ist. Dadurch wird ein fehlerhaftes Erfassen eines Öffnungsvorganges des Garbehältnisses verhindert, das von einer solchen Rückluftströmung verursacht wird.

Als Folge einer vom Dampfraumtemperatursensor erfassten starken Temperaturreduzierung kann es von Vorteil sein, wenn die Regeleinrichtung die Dampfraumtemperaturregelung beendet. Eine solche Beendigung erfolgt etwa, wenn die gemessene Dampfraumtemperatur eine vorbestimmte Zeitdauer nach dem Öffnen des Garbehältnisses nicht wieder auf den Dampfraumtemperatur-Sollwert gestiegen ist.

Eine bevorzugte Bedienung für den Benutzer ergibt sich, wenn der Regeleinrichtung ein Funktionswählschalter zugeordnet ist. Mit dem Funktionswählschalter kann eine Dampfraumtemperaturregelung oder eine Garflüssigkeitstemperaturregelung vom Benutzer ausgewählt werden. In der Dampfraumtemperaturregelung wird die Dampfraumtemperatur geregelt. In der Garflüssigkeitstemperaturregelung wird die Garflüssigkeitstemperatur geregelt. Zusätzlich kann die Regeleinrichtung einen einzigen Leistungsschalter zum Einstellen von Temperaturstufen aufweisen. Durch den Leistungsschalter sind sowohl Solltemperaturen für die Dampfraumtemperaturregelung als auch für die Garflüssigkeitstemperaturregelung einstellbar. Dadurch ergibt sich eine besonders einfache Bedienung des Dampfgargeräts durch den Benutzer.

Zwei Ausführungsbeispiele der Erfindung sind nachfolgend anhand der beigefügten Figuren beschrieben. Es zeigen:
Figur 1 in einer Seitenschnittansicht ein in einer Arbeitsplatte eingebautes Dampfgargerät gemäß dem ersten Ausführungsbeispiel;
Figur 2 in einer vergrößerten Ansicht von oben ein Bedienfeld des Dampfgargeräts aus der Figur 1;
Figur 3 ein Temperatur-Zeit-Diagramm sowie ein Leistungs-Zeit-Diagramm; und
Figur 4 eine Dampfraumtemperatur-Garflüssigkeitstemperatur-Kennlinie gemäß dem zweiten Ausführungsbeispiel.

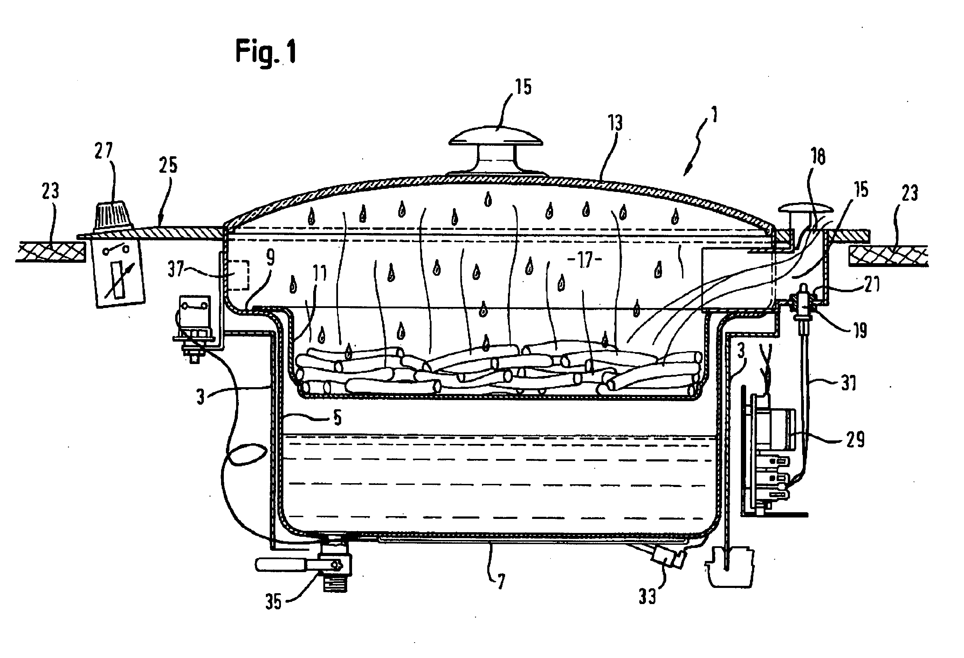

In der Figur 1 ist ein Dampfgargerät 1 gemäß dem ersten Ausführungsbeispiel dargestellt, das zum Dampfgaren und Kochen vorgesehen ist. Das Dampfgargerät 1 weist ein Gehäuse 3 auf, in dem ein Garbehältnis 5 angeordnet ist. Das Garbehältnis 5 ist mit Wasser bzw. einer Garflüssigkeit gefüllt. In der Figur 1 ist das Garbehältnis 5 wannenartig sowie nach oben offen ausgebildet. Außenseitig am Wannenboden ist eine Heizeinrichtung 7 zum Erwärmen der Garflüssigkeit vorgesehen.

Im oberen Bereich der Seitenwand des wannenförmig ausgebildeten Garbehältnisses 5 ist ein abgestufter Umfangsrand 9 geformt. Der abgestufte Umfangsrand 9 stellt eine Abstellfläche für einen Gareinsatz 11 bereit. In den Gareinsatz 11 wird Gargut gegeben. Die Oberseite des wannenförmig ausgebildeten Garbehältnisses 5 ist mit einem Glasdeckel 13 geschlossen, der einen Griff 15 aufweist. Der Deckel 13 schließt das Garbehältnis 5 dichtend ab. Damit sich kein Druck in dem Garbehältnis 5 aufbaut, ist seitlich neben dem Deckel 5 ein Dampfauslasskanal 15 vorgesehen, der einen Dampfraum 17 oberhalb der Garflüssigkeit mit einer Dampfauslassöffnung 18 strömungstechnisch verbindet.

In den Dampfauslasskanal 15 ragt ein Dampfraumtemperatursensor 19, der über eine Befestigungshülse 21 in einer Seitenwand des Dampfauslasskanals 15 gehaltert ist. Die Befestigungshülse 21 ist aus einem thermisch isolierenden Kunststoff gefertigt.

Gemäß der Figur 1 ist das Dampfgargerät in einer Aussparung einer Küchenplatte 23 eingesetzt. Das Dampfgargerät 1 weist an seiner Oberseite eine Bedienblende 25 mit Einstellelementen 27 auf. Diese sind über nicht gezeigte Signalleitungen mit einer elektronischen Steuerungseinrichtung 29 in Verbindung. Die elektronische Steuerungseinrichtung 29 ist wiederum über Leitungen 31 mit dem Dampfraumtemperatursensor in Verbindung. Im Bereich des Wannenbodens des Garbehältnisses 5 ist ein weiterer Sensor 33 gehaltert, der die Temperatur der Gargeräteflüssigkeit erfasst. Das zum Betrieb des Dampfgargeräts 1 erforderliche Wasser wird von oben in das Garbehältnis 5 gefüllt. Es kann über einen Wasserauslass 35 abgelassen werden.

Mit dem Begriff "Kochen" ist eine Betriebsart gemeint, bei der die Regeleinrichtung 29 eine Temperatur T_{GF} der Garflüssigkeit bis zu einer Siedetemperatur T_{S} regelt. Mit dem Begriff "Dampfgaren" ist eine Betriebsart gemeint, bei der die Regeleinrichtung 29 eine Temperatur T_{DR} im Dampfraum 17 oberhalb der Garflüssigkeit regelt.

Die Garflüssigkeit in dem Garbehältnis 5 wird durch die Heizeinrichtung 7 erwärmt, die eine Heizleistung von etwa 2 kW bis 3 kW aufweist. Der sich im Garbehältnis 5 im Dampfraum 17 oberhalb der Garflüssigkeit bildende Dampf kann durch den Dampfauslasskanal 15 aus der Dampfauslassöffnung 18 ungehindert in die Umgebung strömen. Daher entsteht im Betrieb des Dampfgargeräts keinerlei Überdruck in dem Dampfraum 17.

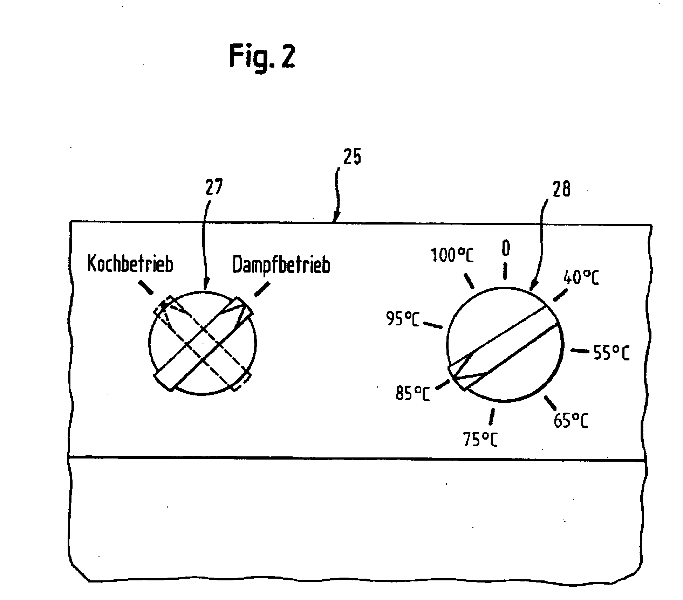

In der Figur 2 ist die Bedienblende 25 in einer Detailansicht von oben vergrößert dargestellt. Die Bedienblende 25 weist einen Funktionswählschalter 27 sowie einen Leistungsschalter 29 zur Einstellung von Temperaturstufen auf. Über einen zusätzlichen, nicht gezeigten Hauptschalter ist das Dampfgargerät in Betrieb zu setzen. Gemäß der Figur 2 ist mittels des Funktionswählschalters 27 eine Dampfbetriebsart ausgewählt, d.h. die Regeleinrichtung 29 regelt die Dampfraumtemperatur T_{DR} auf einen eingestellten Sollwert. In der Figur 2 ist mittels des Leistungsschalters 29 eine Temperatur von 85 °C eingestellt. Da mittels des Funktionswählschalters 27 eine Dampfbetriebsart ausgewählt ist, dienen die von dem Dampfraumtemperatursensor 19 erfassten Ist-Werte zur Regelung der Dampfraumtemperatur T_{DR} ; die eingestellte Temperaturstufe "85 °C" repräsentiert den Soll-Wert für die Regelung der Dampfraumtemperatur T_{DR}.

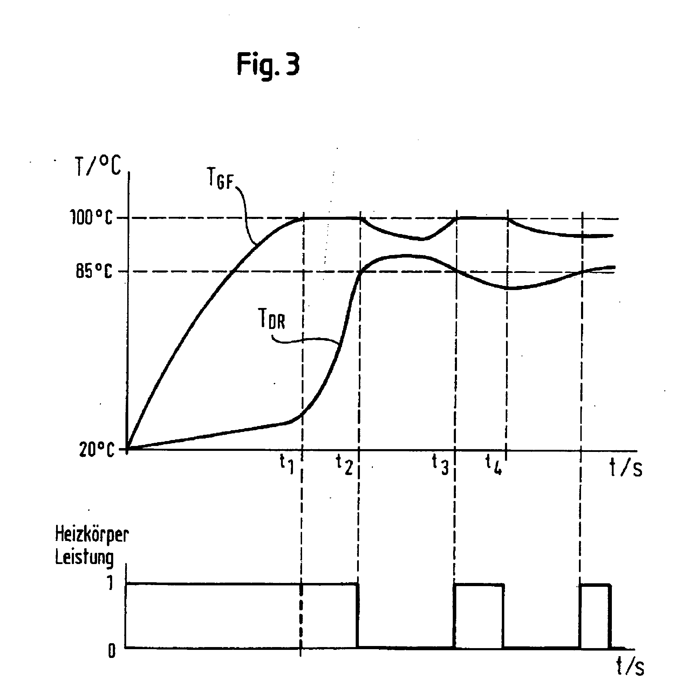

Die Regelung der Dampfraumtemperatur T_{DR} auf den Soll-Wert von 85 °C ist in den Diagrammen aus der Figur 3 ersichtlich: Daraus geht hervor, dass beim Start der Dampfraumtemperatur-Regelung die Heizeinrichtung 7 die Garflüssigkeit zunächst bis zur Siedetemperatur von ca. 100 °C erwärmt. Beim Regelungsstart ist das Zeitverhalten des Dampfraumes 17 aufgrund des geringen Dampfanteils im Dampfraum 17 vergleichsweise träge. Gemäß dem unteren Diagramm aus der Figur 2 wird der Garflüssigkeit bis zum Zeitpunkt t₂ Heizleistung zugeführt. Dabei erfolgt erst innerhalb des Zeitintervalls t₁ bis t₂ eine erhebliche Dampfbildung im Dampfraum 17. In diesem Zeitintervall steigt die gemessene Dampfraumtemperatur T_{DR} entsprechend schnell bis auf den Sollwert von 85 °C an. Nachdem der Dampfraumtemperatursensor 19 ein Überschreiten des Dampfraumtemperatur-Sollwertes von 85 °C erfasst hat, schaltet die elektronische Steuerungseinrichtung 29 zum Zeitpunkt t₂ die Heizeinrichtung 7 aus.

Um nach dem Zeitpunkt t₂ die Heizeinrichtung 7 die vom Dampfraumtemperatursensor 19 erfasste Temperatur auf 85 °C zu regeln, schaltet die Steuereinrichtung 29 die Heizeinrichtung 7 entsprechend ein- bzw. aus. Für eine erhebliche Dampfbildung im Garbehältnis 5 ist es dabei entscheidend, dass die Garflüssigkeit 9 im Regelbetrieb in mehreren Zeitintervallen bis auf die Siedetemperatur erwärmt wird, um eine erhebliche Dampfmenge im Dampfraum 17 zu erzeugen. Bleibt die Garflüssigkeitstemperatur dagegen ständig unterhalb der Siedetemperatur, würde lediglich eine geringe Dampfmenge im Garbehältnis 5 erzeugt werden.

Wird gemäß der Figur 2 mittels des Funktionswählschalters 27 ein Kochbetrieb eingestellt, wie mit gestrichelter Linie dargestellt, so startet die elektronische Steuereinrichtung 29 eine Regelung der Garflüssigkeitstemperatur T_{GF}. Dabei erfasst der Garflüssigkeitstemperatursensor 33 die Ist-Werte für die Regelung. Im vorliegenden Fall wird die Garflüssigkeit auf 85 °C geregelt. Dabei ist es im Gegensatz zu der Dampfraumtemperaturregelung nicht erforderlich, die Garflüssigkeitstemperatur T_{GF} bis zu der Siedetemperatur zu erwärmen.

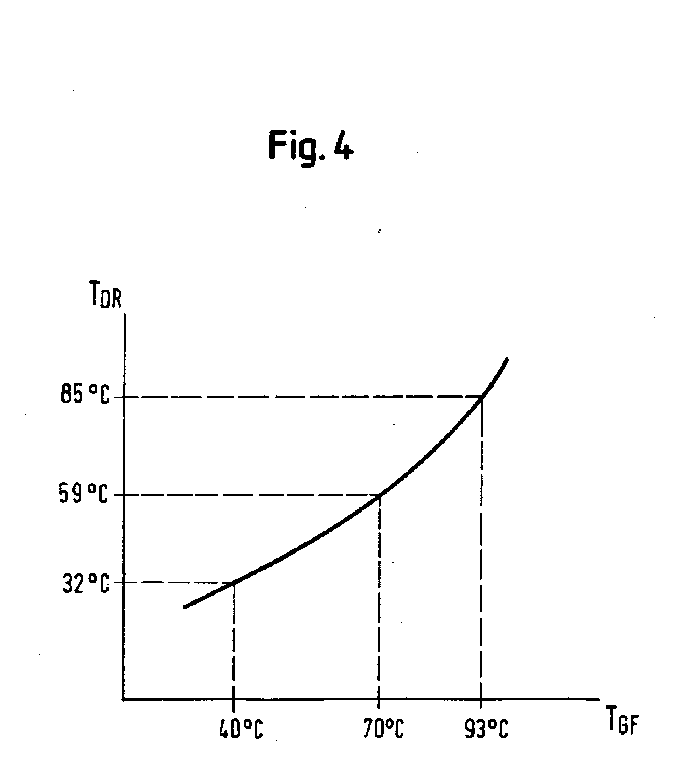

In dem zweiten Ausführungsbeispiel der Erfindung bestimmt die elektronische Steuereinrichtung 29 auf der Grundlage der gemessenen Garflüssigkeitstemperatur T_{GF} die Dampfraumtemperatur T_{DR} im Dampfraum 17. Anhand einer empirisch ermittelten Kennlinie gemäß der Figur 4 kann der erfassten Garflüssigkeitstemperatur T_{GF} die entsprechende Dampfraumtemperatur T_{GF} tabellarisch zugeordnet werden. Demzufolge ist in der Figur 4 einer Garflüssigkeitstemperatur T_{GF} von 40 °C eine Dampfraumtemperatur T_{DR} von 32 °C zugeordnet.

Die elektronische Steuereinrichtung 29 arbeitet bei der Dampfraumtemperaturregelung wie im ersten Ausführungsbeispiel der Figur 1, mit der Ausnahme, dass die elektronische Steuereinrichtung 19 die Ist-Dampfraumtemperaturen T_{DR} lediglich anhand der Kennlinie aus der Figur 4 näherungsweise bestimmt. Eine derartige näherungsweise Bestimmung der Dampfraumtemperatur T_{DR} ist insbesondere beim Start der Dampftemperaturregelung von Vorteil. Beim Start der Dampftemperaturregelung bis zum Zeitpunkt t₁ (siehe Zeitverhalten aus der Figur 3) ist nämlich die Regelung durch das träge Zeitverhalten der Atmosphäre im Dampfraumes 17 erschwert.

In der Figur 1 ist mit gestrichelter Linie am oberen Rand 9 ein Temperatursensor 37 angedeutet, der gegenüber dem Dampfauslasskanal 15 angeordnet ist. Aufgrund seiner Positionierung gegenüber dem Dampfauslasskanal 15 erfasst der Temperatursensor 37 keinerlei Temperaturschwankungen aufgrund einer Rückluftströmung in den Dampfraum 17 hinein. Der Temperatursensor 37 ist über nicht dargestellte Signalleitungen mit der elektronischen Steuerungseinrichtung 29 in Verbindung. Sofern der Temperatursensor 37 eine starke Temperaturreduzierung erfasst, erkennt die elektronische Steuereinrichtung 29, dass der Deckel 13 von dem Garbehältnis 5 genommen ist, um beispielsweise Gargut in den Einsatz 11 zu legen. Die Steuereinrichtung 29 beendet die Dampfraumtemperaturregelung, sofern die von dem Temperatursensor 37 gemessene Dampfraumtemperatur eine vorbestimmte Zeitdauer, z. B. 15 Sekunden, nach dem Öffnen des Garbehältnisses 5 nicht wieder auf den eingestellten Dampfraumtemperatur-Sollwert gestiegen ist. Sollte der Deckel 13 dauerhaft vom Garbehältnis 5 entfernt worden sein, so kann ein automatisches Umschalten vom Dampfbetrieb auf den Kochbetrieb erfolgen oder das Dampfgargerät vollständig ausschalten.

## Patentansprüche

1. Dampfgargerät mit einem Garbehältnis (5) zum Befüllen mit Garflüssigkeit, einer Heizeinrichtung (7) zum Erwärmen des Garbehältnisses (5) und einer Regeleinrichtung (29), die die Heizeinrichtung (7) zur Regelung einer Temperatur (T_{DR}) in einem oberhalb der Garflüssigkeit befindlichen Dampfraum (17) des Garbehältnisses (5) bis auf eine Siedetemperatur (T_{S}) der Garflüssigkeit ansteuert, wobei die Regeleinrichtung (29) zumindest ein Einstellelement (27, 29) zum Einstellen unterschiedlich großer Sollwerte für die Dampfraumtemperatur (T_{DR}) unterhalb der Siedetemperatur (T_{S}) aufweist, wobei der Regeleinrichtung (29) zur Regelung einer Garflüssigkeitstemperatur (T_{GF}) ein erster Temperatursensor (19; 37), der die Temperatur (T_{DR}) im Dampfraum (17) erfasst, und ein zweiter Temperatursensor (33), der die Garflüssigkeitstemperatur (T_{GF}) erfasst, zugeordnet ist, **dadurch gekennzeichnet, dass** die Regeleinrichtung (29) so ausgestaltet ist, dass sie zumindest bei einem Betriebsstart lediglich anhand der Garflüssigkeitstemperatur (T_{GF}) die Dampfraumtemperatur (T_{DR}) im Dampfraum (17) bestimmt.

2. Dampfgargerät nach Anspruch 1, **dadurch gekennzeichnet, dass** der Regeleinrichtung (29) eine empirisch ermittelte Kennlinie zugeordnet ist, welche die Garflüssigkeitstemperatur (T_{GF}) mit der Dampfraumtemperatur (T_{DR}) im Dampfraum (17) verknüpft.

3. Dampfgargerät nach Anspruch 2, **dadurch gekennzeichnet, dass** der Temperatursensor (19) an einer Dampfauslassöffnung (18) des Garbehältnisses (5) angeordnet ist.

4. Dampfgargerät nach einem der vorhergehenden Ansprüche, **dadurch gekennzeichnet, dass** der Temperatursensor (19) mittels einer thermisch isolierenden Halterung (21) an dem Garbehältnis (5) gehaltert ist.

5. Dampfgargerät nach einem der vorhergehenden Ansprüche, **dadurch gekennzeichnet, dass** die Regelung der Dampfraumtemperatur (T_{DR}) durch zumindest ein Zeitintervall (t₁ bis t₂, t₃ bis t₄) unterbrochen ist, in dem die Garflüssigkeit zur Dampferzeugung bis auf die Siedetemperatur erwärmt ist.

6. Dampfgargerät nach einem der vorhergehenden Ansprüche, **dadurch gekennzeichnet, dass** der Regeleinrichtung (29) ein Öffnungssensor (37) zugeordnet ist, der ein Öffnen des Garbehältnisses (5) erfasst.

7. Dampfgargerät nach Anspruch 8, **dadurch gekennzeichnet, dass** der Öffnungssensor der erste Temperatursensor (19; 37) ist.

8. Dampfgargerät nach Anspruch 9, **dadurch gekennzeichnet, dass** der erste Temperatursensor (37) innerhalb des Dampfraumes (17) möglichst beabstandet von der Dampfauslassöffnung (18) angeordnet ist.

9. Dampfgargerät nach einem der Ansprüche 8 bis 10, **dadurch gekennzeichnet, dass** die Regeleinrichtung (29) die Dampfraumtemperaturregelung beendet, wenn die Dampfraumtemperatur (T_{DR}) eine vorbestimmte Zeitdauer nach dem Öffnen des Garbehältnisses (5) nicht wieder auf einen den Sollwert gestiegen ist.

10. Dampfgargerät nach einem der vorhergehenden Ansprüche, **dadurch gekennzeichnet, dass** der Regeleinrichtung (29) ein Funktionswählschalter (27) zum Auswählen der Dampfraumtemperaturregelung oder der Garflüssigkeitstemperaturregelung zugeordnet ist.

11. Dampfgargerät nach einem der vorhergehenden Ansprüche, **dadurch gekennzeichnet, dass** der Regeleinrichtung (29) ein Leistungsschalter (29) zum Einstellen von Temperaturstufen zugeordnet ist.

12. Verfahren zur Temperaturregelung in einem Dampfgargerät nach einem der vorhergehenden Ansprüche, **dadurch gekennzeichnet, dass** es mindestens die folgenden Schritte aufweist:
- Einstellen eines Sollwerts aus einer Gesamtheit unterschiedlich großer Sollwerte für eine Dampfraumtemperatur (T_{DR}) unterhalb der Siedetemperatur (T_{S})
- Ansteuern, durch eine Regeleinrichtung (29), einer Heizeinrichtung (7) zumindest bei einem Betriebsstart bis auf die eingestellte Dampfraumtemperatur (T_{DR}) lediglich anhand einer Garflüssigkeitstemperatur (T_{GF}).

## Claims

1. Steam cooking appliance with a cooking container (5) for filling with cooking liquid, a heating device (7) for heating the cooking container (5) and a regulating device (29), which controls the heating device (7) for regulation of a temperature (T_{DR}) in a steam space (17), which is located above the cooking liquid, of the cooking container (5) until a boiling temperature (T_{S}) of the cooking liquid, wherein the regulating device (29) comprises at least one setting element (27, 29) for setting target values of different size for the steam space temperature (T_{DR}) below the boiling temperature (T_{S}), wherein associated with the regulating device (29) for regulating a cooking liquid temperature (T_{GF}) are a first temperature sensor (19; 37) detecting the temperature (T_{DR}) in the steam space (17) and a second temperature sensor (33) detecting the cooking liquid temperature (T_{GF}), **characterised in that** the regulating device (29) is so designed that at least at a start of operation it determines the steam space temperature (T_{DR}) in the steam space (17) merely by way of the cooking liquid temperature (T_{GF}).

2. Steam cooking appliance according to claim 1, **characterised in that** an empirically determined characteristic curve which links the cooking liquid temperature (T_{GF}) with the steam space temperature (T_{DR}) in the steam space (17) is associated with the regulating device (29).

3. Steam cooking appliance according to claim 2, **characterised in that** the temperature sensor (9) is arranged at a steam outlet opening (18) of the cooking container (5).

4. Steam cooking appliance according to one of the preceding claims, **characterised in that** the temperature sensor (19) is mounted at the cooking container (5) by means of a thermally insulating mount (21).

5. Steam cooking appliance according to one of the preceding claims, **characterised in that** the regulation of the steam space temperature (T_{DR}) is interrupted by at least one time interval (t₁ to t₂, t₃ to t₄) in which the cooking liquid is heated for steam generation up to the boiling temperature.

6. Steam cooking appliance according to one of the preceding claims, **characterised in that** an opening sensor (37) detecting opening of the cooking container (5) is associated with the regulating device (29).

7. Steam cooking appliance according to claim 6, **characterised in that** the opening sensor is the first temperature sensor (19; 37).

8. Steam cooking appliance according to claim 8, **characterised in that** the first temperature sensor (37) is arranged within the steam space (17) spaced as far as possible from the steam outlet opening (18).

9. Steam cooking appliance according to one of claims 6 to 8, **characterised in that** the regulating device (29) concludes the steam space temperature regulation when the steam space temperature (T_{DR}) has not risen back to a target value after a predetermined time period from opening of the cooking container (5).

10. Steam cooking appliance according to one of the preceding claims, **characterised in that** a function selector switch (27) for selecting the steam space temperature regulation or the cooking liquid temperature regulation is associated with the regulating device (29).

11. Steam cooking appliance according to one of the preceding claims, **characterised in that** a power switch (29) for setting temperature steps is associated with the regulating device (29).

12. Method for temperature regulation in a steam cooking appliance according to one of the preceding claims, **characterised in that** it comprises at least the following steps:
- setting a target value from a totality of target values of different size for a steam space temperature (T_{DR}) below the boiling temperature (T_{S})
- controlling, by a regulating device (29), a heating device (7) at least at a start of operation up to the set steam space temperature (T_{DR}) merely by way of a cooking liquid temperature (T_{GF}).

## Revendications

1. Appareil de cuisson à vapeur comprenant un récipient de cuisson (5) pour le remplissage avec du liquide de cuisson, un dispositif de chauffage (7) pour le réchauffement du récipient de cuisson (5) et un dispositif de réglage (29), qui commande le dispositif de chauffage (7) pour le réglage d'une température (T_{DR}) dans un espace vapeur (17), se trouvant au-dessus du liquide de cuisson, du récipient de cuisson (5) jusqu'à une température d'ébullition (Tₛ) du liquide de cuisson, le dispositif de réglage (29) présentant au moins un élément de réglage (27, 29) pour le réglage de valeurs de consigne différentes pour la température de l'espace vapeur (T_{DR}) au-dessous de la température d'ébullition (Tₛ), un premier capteur de température (19 ; 37), qui enregistre la température (T_{DR}) dans l'espace vapeur (17), et un second capteur de température (33), qui enregistre la température du liquide de cuisson (T_{GF}), étant attribués au dispositif de réglage (29) pour le réglage d'une température du liquide de cuisson (T_{GF}), **caractérisé en ce que** le dispositif de réglage (29) est équipé de telle sorte qu'il détermine la température de l'espace vapeur (T_{DR}) dans l'espace vapeur (17) tout du moins lors d'un démarrage de service uniquement à l'aide de la température du liquide de cuisson (T_{GF}).

2. Appareil de cuisson à vapeur selon la revendication 1, **caractérisé en ce qu'**une ligne caractéristique déterminée de façon empirique, qui associe la température du liquide de cuisson (T_{GF}) à la température de l'espace vapeur (T_{DR}) dans l'espace vapeur (17), est attribuée au dispositif de réglage (29).

3. Appareil de cuisson à vapeur selon la revendication 2, **caractérisé en ce que** le capteur de température (19) est disposé sur une sortie d'ouverture de vapeur (18) du récipient de cuisson (5).

4. Appareil de cuisson à vapeur selon l'une quelconque des revendications précédentes, **caractérisé en ce que** le capteur de température (19) est fixé sur le récipient de cuisson (5) au moyen d'une fixation (21) thermoisolante.

5. Appareil de cuisson à vapeur selon l'une quelconque des revendications précédentes, **caractérisé en ce que** le réglage de la température de l'espace vapeur (T_{DR}) est interrompu par au moins un intervalle de temps (t₁ à t₂, t₃ à t₄), pendant lequel le liquide de cuisson pour la production de vapeur est réchauffé jusqu'à la température d'ébullition.

6. Appareil de cuisson à vapeur selon l'une quelconque des revendications précédentes, **caractérisé en ce qu'**un capteur d'ouverture (37), qui enregistre une ouverture du récipient de cuisson (5), est attribué au dispositif de réglage (29).

7. Appareil de cuisson à vapeur selon la revendication 6, **caractérisé en ce que** le capteur d'ouverture est le premier capteur de température (19 ; 37).

8. Appareil de cuisson à vapeur selon la revendication 7, **caractérisé en ce que** le premier capteur de température (37) est disposé à l'intérieur de l'espace vapeur (17) le plus espacé possible de l'ouverture de sortie de vapeur (18).

9. Appareil de cuisson à vapeur selon l'une quelconque des revendications 6 à 8, **caractérisé en ce que** le dispositif de réglage (29) achève le réglage de la température de l'espace vapeur lorsque la température de l'espace vapeur (T_{DR}) n'a pas augmenté à nouveau jusqu'à l'une des valeurs prescrites à un moment prédéfini après l'ouverture du récipient de cuisson (5).

10. Appareil de cuisson à vapeur selon l'une quelconque des revendications précédentes, **caractérisé en ce qu'**un sélecteur de fonction (27) est attribué au dispositif de réglage (29) pour la sélection du réglage de la température d'espace vapeur ou du réglage de la température du liquide de cuisson.

11. Appareil de cuisson à vapeur selon l'une quelconque des revendications précédentes, **caractérisé en ce qu'**un sélecteur de puissance (29) pour le réglage des niveaux de température est attribué au dispositif de réglage (29).

12. Procédé pour le réglage de température dans un appareil de cuisson à vapeur selon l'une quelconque des revendications précédentes, **caractérisé en ce qu'**il présente au moins les étapes suivantes :
- réglage d'une valeur de consigne à partir d'un ensemble de valeurs de consigne différentes pour une température de l'espace vapeur (T_{DR}) au-dessous de la température d'ébullition (Tₛ)
- commande, par un dispositif de réglage (29), d'un dispositif de chauffage (7) au moins lors d'un démarrage de service jusqu'à la température réglée de l'espace vapeur (T_{DR}) uniquement à l'aide d'une température du liquide de cuisson (T_{GF}).
